# EUROPEAN PATENT APPLICATION

(11) **EP 4 554 301 A1**
(43) Date of publication of application: **14.05.2025**
(21) Application number: 23834773.6
(22) Date of filing: 30.06.2023
(51) Int. Cl.: H04W 72/04

(54) **INFORMATION PROCESSING METHOD AND APPARATUS, AND TERMINAL**

(30) Priority: 07.07.2022 CN 202210802828
(71) Applicant: Vivo Mobile Communication Co., Ltd., Dongguan, Guangdong 523863 (CN)
(72) Inventor: PENG, Shuyan, Dongguan, Guangdong 523863 (CN); WU, Huaming, Dongguan, Guangdong 523863 (CN); SI, Ye, Dongguan, Guangdong 523863 (CN)
(74) Representative: Conti, Marco
(86) International application number: PCT/CN2023/105054
(87) International publication number: WO 2024/008006

(57) **Abstract**

This application discloses an information processing method and apparatus and a terminal, and pertains to the field of communication technology. The information processing method according to an embodiment of this application includes: determining, by a terminal, a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

## Description

### CROSS-REFERENCE TO RELATED APPLICATIONS

This application claims priority to Chinese Patent Application No. 202210802828.3, filed in China on July 7, 2022, which is incorporated herein by reference in its entirety.

### TECHNICAL FIELD

This application pertains to the field of communication technology, and specifically relates to an information processing method and apparatus and a terminal.

### BACKGROUND

In the related technology, a sidelink (Sidelink, SL) channel occupancy ratio (Channel Occupancy Ratio, CR) or channel busy ratio (Channel Busy Ratio, CBR) measures, fixedly in slots (in time domain) or sub-channels (in frequency domain), a proportion of resources used/reserved for SL physical sidelink shared channel (Physical Sidelink Shared Channel, PSSCH) transmission to the total resources. However, in SL positioning, SL positioning reference signals (Positioning Reference Signal, PRS) can be sent independently, where resources for SL PRS can be allocated at the resource element (Resource Element, RE) level in frequency domain, or resources for SL PRS can be allocated at the mini-slot level (mini-slot level) in time domain. Therefore, the existing methods for determining SL CR/CBR may not be applicable to congestion control calculation during SL PRS and/or SL PSSCH transmission.

### SUMMARY

Embodiments of this application provide an information processing method and apparatus and a terminal, so as to solve the problem that the methods for determining SL CR/CBR in the related technology are not applicable to congestion control calculation during SL PRS and/or SL PSSCH transmission.

According to a first aspect, an information processing method is provided, including:
determining, by a terminal, a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

According to a second aspect, an information processing apparatus is provided, including:
a first determining module configured to determine a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

According to a third aspect, a terminal is provided. The terminal includes a processor and a memory, where the memory stores a program or instructions capable of running on the processor, and when the program or instructions are executed by the processor, the steps of the method according to the first aspect are implemented.

According to a fourth aspect, a terminal is provided, including a processor and a communication interface, where the processor is configured to determine a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided. The chip includes a processor and a communication interface, where the communication interface is coupled to the processor, and the processor is configured to run a program or instructions to implement the method according to the first aspect.

According to a seventh aspect, a computer program/program product is provided, where the computer program/program product is stored in a storage medium, and the computer program/program product is executed by at least one processor to implement the steps of the method according to the first aspect.

In the embodiments of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

### BRIEF DESCRIPTION OF DRAWINGS

FIG. 1 is a structural diagram of a communication system to which the embodiments of this application are applicable;
FIG. 2 is a schematic flowchart of an information processing method according to an embodiment of this application;
FIG. 3 is a schematic diagram of resources for PRS according to an embodiment of this application;
FIG. 4 is a schematic diagram of resources for PRS and SCI (including PSCCH and second-level SCI) and data according to an embodiment of this application;
FIG. 5 is a schematic module diagram of an information processing apparatus according to an embodiment of this application;
FIG. 6 is a structural block diagram of a communication device according to an embodiment of this application; and
FIG. 7 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

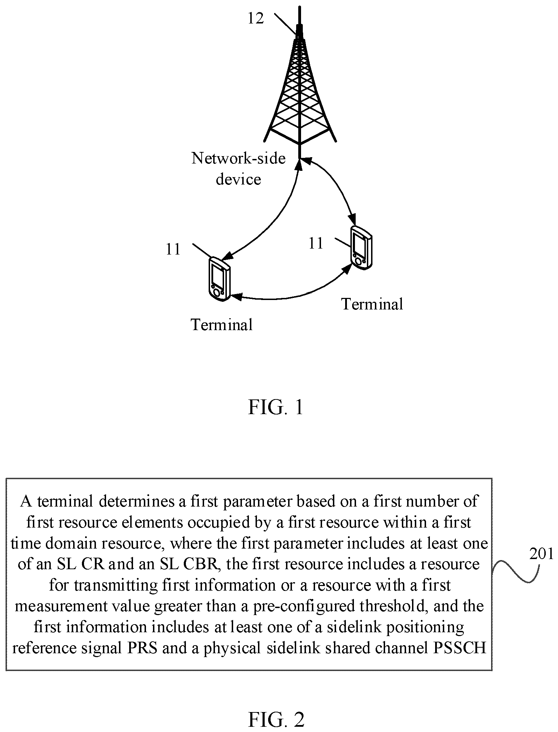

FIG. 1 is a block diagram of a wireless communication system to which the embodiments of this application are applicable. The wireless communication system includes a terminal 11 and a network-side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other suitable terms in the field. As long as the same technical effect is achieved, the base station is not limited to specific technical terms. It should be noted that in the embodiments of this application, only the base station in an NR system is taken as an example for description, and the specific type of the base station is not limited.

To enable persons skilled in the art to better understand the embodiments of this application, the following description is provided.

### 1. SL

The NR system supports sidelink transmission for direct data transmission between user equipments (User Equipment, UE) without using a network device. The 5G NR system supports unicast, multicast, or broadcast transmission.

NR sidelink includes the following channels:
physical sidelink control channel (Physical Sidelink Control Channel, PSCCH);
physical sidelink shared channel (Physical Sidelink Shared Channel, PSSCH);
physical sidelink broadcast channel (Physical Sidelink Broadcast Channel, PSBCH); and
physical sidelink feedback channel (Physical Sidelink Feedback Channel, PSFCH).

For PSSCH, resources are allocated by sub-channel (sub-channel). In frequency domain, continuous resource allocation is used. The size of the time domain resource of PSCCH is a number of symbols configured by the higher layer, and the size of the frequency domain resource is a parameter configured by the higher layer. The frequency domain resources of PSCCH is limited to be less than or equal to the size of one sub-channel, with PSCCH located within the range of the lowest sub-channel of PSSCH.

In R16/R17 NR SL, SL resources are allocated by slot (slot), that is, the resource allocation is based on slots. In frequency domain, resources are allocated by sub-channel. A sub-channel contains A continuous PRSs, where a value of A is a parameter configured by radio resource control (Radio Resource Control, RRC).

### 2. NR SL resource allocation method:

NR V2X defines two resource allocation modes (mode): one is mode1, where a base station schedules resources; the other is mode2, where UE determines which resources are to be used for transmission. In this case, resource information may come from a broadcast message of the base station or pre-configured information. If the UE is within the coverage of the base station and has an RRC connection with the base station, the UE can operate in mode1 and/or mode2. If the UE is within the coverage of the base station but does not have an RRC connection with the base station, the UE can only operate in mode2. If the UE is outside the coverage of the base station, the UE can merely operate in mode2 and perform V2X transmission based on pre-configured information.

In mode2, a specific operating procedure is as follows: (1) After resource selection is triggered, a TX UE determines a resource selection window first. The lower boundary of the resource selection window is at time T1 after the resource selection is triggered, and the upper boundary of the resource selection window is at time T2 after the resource selection is triggered, where T2 is a value selected within a packet delay budget (packet delay budget, PDB) for TB transmission by using the UE implementation, and T2 is not earlier than T1. (2) Before resource selection, the UE needs to determine a candidate resource set (candidate resource set) for resource selection and compares a reference signal received power (reference signal received power, RSRP) measured on a resource within the resource selection window with a corresponding RSRP threshold (threshold). If the RSRP is lower than the RSRP threshold, that resource can be included into the candidate resource set. (3) After the resource set is determined, the UE randomly selects transmission resources from the candidate resource set. In addition, the UE can reserve transmission resources for a next transmission during the current transmission.

NR V2X supports chained resource reservation. To be specific, in addition to a current reserved resource, a maximum of two additional resources may be reserved for one piece of sidelink control information (Sidelink Control Information, SCI), and then another two reserved resources can be further indicated in a next resource. In the selection window, resources may be continuously reserved in a dynamic reservation manner.

### 3. SL channel occupancy ratio (channel occupancy ratio, CR)

In R16, the SL CR is a value evaluated by the UE in slot n by dividing a sum of the number of sub-channels that the UE has transmitted in the range of slots [n-a, n-1] and the number of sub-channels that the UE has reserved or indicated in the range of slots [n, n+b] by the total number of sub-channels in the range of [n-a, n+b].

When the UE sends PSSCH in slot n, the UE needs to ensure that the value measured in slot n meets Σ_{i≥k} CR(i) ≤ CR_{Limit}(k). CR(i) is the CR of PSSCH with priority i evaluated in slot n-N, and CR_{Limit}(k) is the SL CR limit with priority k configured by the higher layer, where N is the processing time for congestion control.

### 4. SL channel busy ratio (channel busy ratio, CBR)

The SL channel busy ratio is a proportion of the number of sub-channels sub-channels, whose SL RSSI is greater than the (pre-)configured threshold, measured by the UE in slot n within the range [n-a, n-1] of the CBR measurement window in the total number of sub-channels within the [n-a, n-1] range. a = 100 or 100·2µ slots. The value of this parameter is configured by the higher layer.

The following details an information processing method according to an embodiment of this application through some embodiments and application scenarios thereof with reference to the accompanying drawings.

As shown in FIG. 2, an embodiment of this application provides an information processing method, including the following step.

Step 201: A terminal determines a first parameter based on a first number of first resource units occupied by a first resource within a first time domain resource, where the first parameter includes at least one of an SL CR and an SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

Optionally, the first measurement value includes but is not limited to at least one of a received signal strength indication (Received Signal Strength Indication, RSSI), a reference signal received power (Reference Signal Received Power, RSRP), a signal to interference plus noise ratio (Signal to Interference plus Noise Ratio, SINR), and a packet reception failure rate.

In the embodiment of this application, the SL CR is determined based on a proportion of the first number of first resource units occupied by the first resource within the first time domain resource (for example, slot [n-a, n+b]) in the total number of resources within the first time domain resource.

The SL CBR is determined based on a proportion of the first number of first resource units occupied by the first resource (for example, a resource with an RSSI greater than a (pre-)configured threshold) within the first time domain resource (for example, slot [n-a1, n-1]) to the total number of resources within the first time domain resource.

Optionally, in the embodiment of this application, the terminal transmits SL PRS and/or SL PSSCH (for example, an SL measurement report) in a case that the first parameter is less than a first parameter threshold. The first parameter threshold is a predefined, pre-configured, or configured parameter.

In the embodiments of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

Optionally, a time domain resource granularity of the first resource or a resource granularity of the first time domain resource includes one of the following:
slot (slot);
symbol (symbol(s));
mini-slot (mini-slot); and
pre-configured time domain pattern;
a frequency domain resource granularity of the first resource includes one of the following:
   resource element (Resource Element, RE(s));
   comb type;
   physical resource block (Physical Resource Block, PRB(s));
   sub-channel (sub-channel);
   pre-configured frequency domain pattern; and
   a frequency domain resource granularity determined based on a ratio of sub-channels to M, where M is determined based on comb type configuration; and
   the first resource unit meets at least one of the following:
      the first resource unit includes one or more REs, or includes one or more resource blocks, or includes one or more comb resources;
      a frequency domain resource granularity of the first resource unit includes RE, comb type, PRB, sub-channel, pre-configured frequency domain pattern, or a frequency domain resource granularity determined based on a ratio of sub-channels to M; and
      a time domain resource granularity of the first resource unit includes slot, symbol, mini-slot, or pre-configured time domain pattern.

Optionally, the time domain resource granularity of the first resource, the resource granularity of the first time domain resource, the frequency domain resource granularity of the first resource, or the first resource unit is predefined or configured, pre-configured, or indicated (by a network-side device or a terminal, such as a scheduling UE).

Optionally, the time domain resource granularity of the first resource, the resource granularity of the first time domain resource, the frequency domain resource granularity of the first resource, or the first resource unit is related to configuration of the first information.

Optionally, the method according to the embodiment of this application further includes:
in a case that the configuration of the first information meets a first condition, determining that the time domain resource granularity of the first resource or the resource granularity of the first time domain resource is slot; where
the first condition includes at least one of the following:
   the configuration of the first information indicates that the first information is transmitted based on slot;
   the configuration of the first information indicates that the first information is transmitted in 12 symbols or 14 symbols; and
   the configuration of the first information indicates that one first information occasion (for example, an SL PRS occasion) is configured for one slot.

Optionally, the method according to the embodiment of this application further includes:
in a case that the configuration of the first information meets a second condition, determining that the frequency domain resource granularity of the first resource or the frequency domain resource granularity of the first resource unit is PRB, sub-channel, or a frequency domain resource granularity determined based on a ratio of sub-channels to M, where M is determined based on comb type configuration; or
in a case that the configuration of the first information does not meet a second condition, determining that the frequency domain resource granularity of the first resource or the frequency domain resource granularity of the first resource unit is resource element RE or comb type; where
the second condition includes at least one of the following:
   the configuration of the first information indicates that the first information is full REs (full RE) or full RBs or continuous frequency domain resources;
   the configuration of the first information indicates that the first information does not support frequency domain multiplexing; and
   the configuration of the first information indicates that the first information does not support comb.

Optionally, in the embodiment of this application, mini-slot transmission is based on a transmission unit with a length less than or equal to 13 symbols (symbol), for example, 1, 2, 4, 6, or 12 symbols (1 symbol may be full REs), or 2, 3, 5, 7, or 13 symbols (considering that automatic gain control (automatic gain control, AGC) symbols are also symbols in SL transmission (transmission)), or 3, 4, 6, or 8 symbols (considering that AGC symbols + guard period (GP) symbols are also symbols in SL transmission).

Optionally, in the embodiment of this application, the determining, by a terminal, a first parameter based on a first number of first resource units occupied by a first resource within a first time domain resource include:
determining, by the terminal, the first parameter based on a first ratio of the first number to a total number of resources within the first time domain resource.

In an optional implementation, the first ratio of the first number to the total number of resources within the first time domain resource is determined as the first parameter.

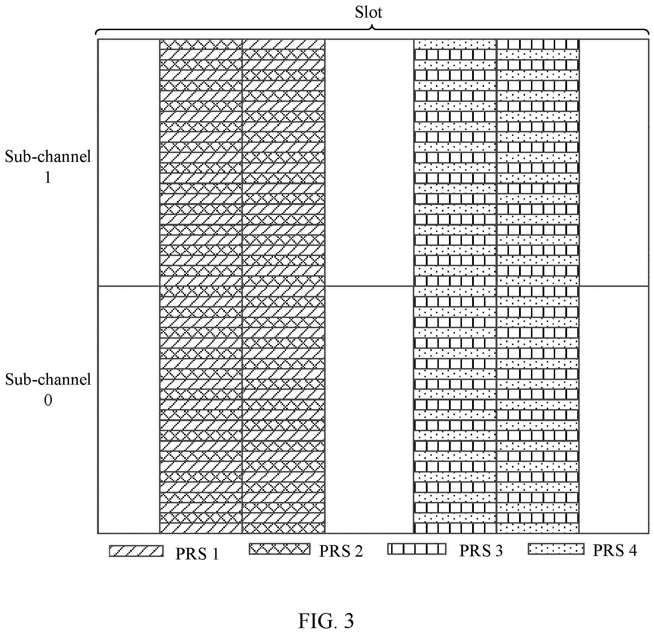

In another optional implementation, a ratio of the first ratio to M is determined as the first parameter, where M is determined based on comb type configuration of the first resource unit or the first resource. For example, as shown in FIG. 3, comb M = 2 indicates that an SL PRS appears once every other RE.

Optionally, the total number of resources includes one of the following:
the number of resource units within the first time domain resource;
the number of resource units available for sidelink PRS within the first time domain resource; where optionally, if SL PRS and SL PSSCH are in a shared resource pool, SL PRS is limited to selecting resources within a sub-pool (sub-pool); and if SL PSSCH is in a shared resource pool, SL PSSCH is limited to selecting resources within a sub-pool;
the number of resource units available for sidelink PRS within a time domain resource of the first time domain resource;
the number of resource units available for PSSCH within the first time domain resource; and
the number of resource units available for PSSCH within a time domain resource of the first time domain resource; where
the resource unit includes one of the following:
   slot;
   symbol;
   mini-slot; and
   pre-configured time domain pattern.

Optionally, the total number of resources is related to the first information transmitted or evaluated. If SL PRS is transmitted, the total number of resources is related to resources available for SL PRS; and if SL PSSCH is transmitted, the total number of resources is related to resources available for SL PSSCH.

In an implementation, in a case that the first information is a PRS, the total number of resources includes one of the following:
the number of resource units available for sidelink PRS within the first time domain resource; and
the number of resource units available for sidelink PRS within a time domain resource of the first time domain resource; or
in a case that the first information is a PSSCH, the total number of resources includes one of the following:
   the number of resource units available for PSSCH within the first time domain resource; and
   the number of resource units available for PSSCH within a time domain resource of the first time domain resource.

Optionally, the determining, by a terminal, a first parameter based on a first number of first resource units occupied by a first resource within a first time domain resource includes:
determining, by the terminal on a second resource, the first parameter based on the first number of first resource units occupied by the first resource within the first time domain resource; where
a position of the second resource meets one of the following:
   being a first position; and
   being a position N time units before the first position, where the time unit may be a slot, a symbol, or the like; where
   the first position includes at least one of the following:
      a position of the N1-th symbol within a first slot, or a position offset by N1 symbols with respect to a target position within the first slot, where N1 corresponds to at least one configuration value, and the target position includes a start position or an end position;
      a start position of a sidelink PRS occasion within the first slot, where there may be one or more SL PRS occasions (occasion) within one slot, a start position and/or a length of the SL PRS occasion is a protocol-predefined/pre-configured/configured parameter, and the terminal determines the start position and/or end position of the SL PRS occasion based on configuration;
      a start position of a selectable sidelink PRS occasion within the first slot, where there may be one or more SL PRS occasions within one slot, a start position and/or a length of the SL PRS occasion is a protocol-predefined/pre-configured/configured parameter, and the terminal determines the start position and/or end position of the SL PRS occasion based on configuration;
      a start position of a mini-slot within the first slot, where there may be one or more mini-slots within one slot, a start position and/or a length of the mini-slot is a protocol-predefined/pre-configured/configured parameter, and the terminal determines the start position and/or end position of the mini-slot based on configuration;
   an end position of a sidelink PRS occasion within the first slot;
   an end position of a mini-slot within the first slot;
   a start position of the N2-th sidelink PRS occasion within the first slot, where N2 is a predefined value, a pre-configured value, a configured value, or an indicated value, or N2 is a value determined based on time-frequency resource configuration information;
   a start position of the N3-th mini-slot within the first slot, where N3 is a predefined value, a pre-configured value, a configured value, or an indicated value, or N3 is a value determined based on time-frequency resource configuration information;
   an end position of the N4-th sidelink PRS occasion within the first slot, where N4 is a predefined value, a pre-configured value, a configured value, or an indicated value, or N4 is a value determined based on time-frequency resource configuration information; and
   an end position of the N5-th mini-slot within the first slot, where N5 is a predefined value, a pre-configured value, a configured value, or an indicated value, or N5 is a value determined based on time-frequency resource configuration information.

Optionally, N is determined based on a time of a CR and/or CBR measurement or evaluation performed by the terminal.

Optionally, the determining, by a terminal, a first parameter based on a first number of first resource units occupied by a first resource within a first time domain resource includes:
determining, in a first resource pool or a first bandwidth part (Bandwidth Part, BWP) according to first configuration information, the first parameter based on a first number of first frequency domain resource units occupied by the first resource within the first time domain resource; where
the first configuration information indicates one of the following:
   the sidelink PRS is transmitted in a dedicated resource pool;
   the sidelink PRS is transmitted in a mini-slot;
   the sidelink PRS is configured to be transmitted in comb or full REs; and
   the sidelink PRS and the SL PSSCH are configured in a dedicated resource pool. Optionally, only SL PRS and/or SL PSSCH can be transmitted within this dedicated resource pool.

Optionally, the first resource pool or the first BWP is a dedicated resource pool corresponding to the first information.

In the embodiments of this application, if SL PRS is defined as a frequency domain resource within the BWP range/outside the resource pool range, it can be considered that the CR/CBR of SL PRS is defined based on the BWP bandwidth range.

Optionally, the determining, by a terminal, a first parameter based on a first number of first resource units occupied by a first resource within a first time domain resource includes:
determining, by the terminal in a second resource pool or a second BWP according to second configuration information, the first parameter based on a first number of first frequency domain resource units occupied by the first resource within the first time domain resource; where
the second configuration information indicates one of the following:
   the sidelink PRS and the PSSCH are in a shared resource pool, or the sidelink PRS and a sidelink measurement report are in a shared resource pool, or the sidelink PRS and a physical sidelink feedback channel PSFCH are in a shared resource pool;
   the sidelink PRS and the PSSCH are transmitted in a same resource pool; and
   the sidelink PRS and the PSSCH are transmitted in a same time domain resource unit (for example, a slot).

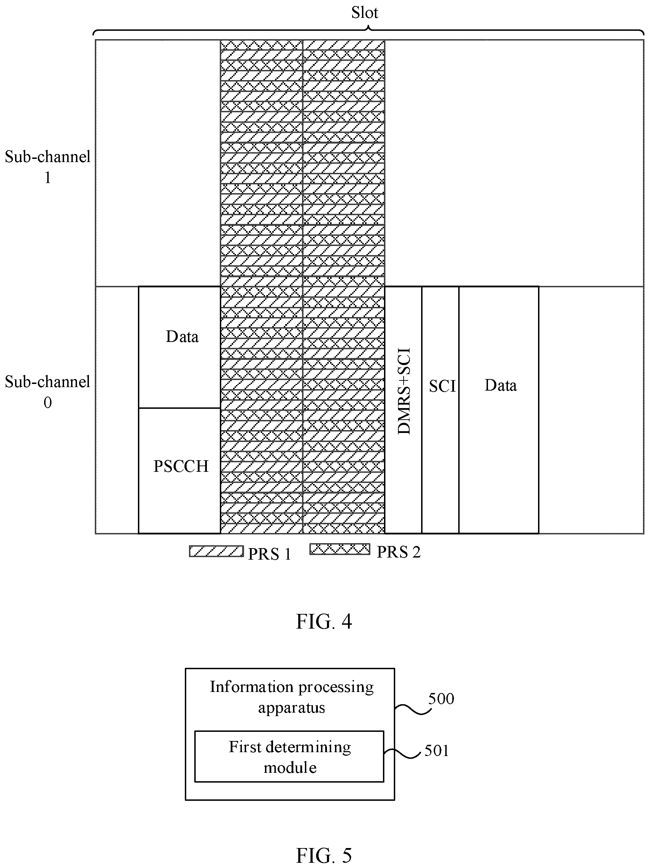

Optionally, the second resource pool or the second BWP is a shared resource pool corresponding to the sidelink PRS and the PSSCH, as shown in FIG. 4.

Optionally, the determining, by a terminal, a first parameter based on a first number of first resource units occupied by a first resource within a first time domain resource includes:
in a case that a sidelink PRS is configured or indicated, determining, by the terminal, the first parameter based on the first number of first resource units occupied by the first resource within the first time domain resource.

Optionally, in a case that an SL PSSCH is configured or indicated, or that only an SL PSSCH configured or indicated, or that no SL PRS is configured or indicated, the first parameter is calculated according to the first parameter calculation method in R16/R17.

Optionally, the method according to the embodiment of this application further includes:
determining the first resource based on a resource corresponding to the sidelink PRS and/or a resource corresponding to the PSSCH.

In the embodiment of this application, the resource corresponding to the sidelink PRS and/or the resource corresponding to the PSSCH is determined as the first resource. Specifically, the first resource may be determined from the resource corresponding to the sidelink PRS and/or the resource corresponding to the PSSCH according to a predefinition, a configuration, or an indication.

In a specific embodiment of this application, the CR is evaluated in slot n. Specifically, the CR is determined based on a ratio of a sum of REs used in slot [n-a, n-1] and REs reserved in slot [n, n+b] to a total number of REs configured in slot [n-a, n+b]. In this embodiment, the position of the first resource is slot n, and the first frequency domain resource unit is an RE. Alternatively, in this embodiment, the CBR is evaluated in slot n. Specifically, the CBR is determined based on a ratio of the number of REs used in slot [n-a, n-1] (the REs with the evaluation RSSI greater than a pre-configured threshold are considered as the REs used) to a total number of REs configured in slot [n-a, n-1].

In a specific embodiment of this application, the CR is evaluated in slot n. Specifically, a ratio of the total number of sub-channels used in slot [n-a, n-1] and sub-channels reserved in slot [n, n+b] to the number of sub-channels configured in slot [n-a, n+b] is determined, and then the ratio determined is divided by comb M to obtain the CR. Alternatively, in this embodiment, the CBR is evaluated in slot n. Specifically, a ratio of the number of sub-channels used in slot [n-a, n-1] (the sub-channels with the evaluation RSSI greater than a pre-configured threshold are considered as the sub-channels used) to the number of sub-channels configured in slot [n-a, n-1] is determined, and then the ratio determined is divided by comb M to obtain the CBR.

In a specific embodiment of this application, the CR is evaluated in slot n. Specifically, a ratio of the total number of sub-channels used in slot [n-a, n-1] and sub-channels reserved in slot [n, n+b] to the number of sub-channels configured in slot [n-a, n+b] is determined, and then the ratio determined is divided by X to obtain the CR. X is the number of mini-slots in each slot, or a predefined or (pre-)configured parameter. This method can be used to calculate the CR in a scenario where one UE transmits SL PRS in only one mini-slot of one slot. Alternatively, in this embodiment, the CBR is evaluated in slot n. Specifically, a ratio of the number of sub-channels used in slot [n-a, n-1] (the sub-channels with the evaluation RSSI greater than a pre-configured threshold are considered as the sub-channels used) to the number of sub-channels configured in slot [n-a, n-1] is determined, and then the ratio determined is divided by X to obtain the CBR. X is the number of mini-slots in each slot, or a predefined or (pre-)configured parameter.

In a specific embodiment of this application, the CR is evaluated in a mini-slot (within slot n). Specifically, the CR is determined according to a ratio of a total number of REs/sub-channels/PRBs used in mini-slots of slot [n-a, n-1] and REs/sub-channels/PRBs reserved in mini-slots of slot [n, n+b] to a total number of REs/sub-channels/PRBs in mini-slots configured within slot [n-a, n+b], or to a total number of REs/sub-channels/PRBs within X*slot [n-a, n+b]; where X is the number of mini-slots within each slot, or a predefined or (pre-)configured parameter.

Alternatively, further, the CR is a ratio of the foregoing ratio to comb M. For example, CR = the foregoing ratio/comb M.

In this embodiment of this application, the CBR is evaluated in a mini-slot (within slot n). Specifically, the CBR is determined according to a ratio of the number of REs/sub-channels/PRBs used in mini-slots of slot [n-a, n-1] (the REs/sub-channels/PRBs with the evaluation RSSI greater than a pre-configured threshold are considered as the REs/sub-channels/PRBs used) to a total number of REs/sub-channels/PRBs in mini-slots configured in mini-slots of slot [n-a, n-1], or to a total number of REs/sub-channels/PRBs within X*slot [n-a, n-1]; where X is the number of mini-slots within each slot, or a predefined/(pre-)configured parameter.

Alternatively, further, the CBR is a ratio of the foregoing ratio to comb M. For example, CBR = the foregoing ratio/comb M.

In this embodiment, if SL PRS is transmitted at a mini-slot granularity, it is evaluated at a mini-slot granularity. The first time domain resource is in unit of slots, the first resource unit is in unit of mini-slots in time domain, and the first resource or the first resource unit is in the unit of REs/sub-channels/PRBs in frequency domain.

In a specific embodiment of this application, the CR is evaluated in a mini-slot of slot n. Specifically, the CR is determined according to a ratio of a total number of REs/sub-channels/PRBs used in mini-slots of slot [n-a, n-1] and REs/sub-channels/PRBs reserved in mini-slots of slot [n, n+b] to a total number of REs/sub-channels/PRBs in mini-slots configured within slot [n-a, n+b]; or, further, the CR is a ratio of the ratio determined to comb M.

In this embodiment, the CBR is evaluated in a mini-slot of slot n. Specifically, the CBR is determined according to a ratio of the number of REs/sub-channels/PRBs used in slot [n-a, n-1] (the REs/sub-channels/PRBs with the evaluation RSSI greater than a pre-configured threshold are considered as the REs/sub-channels/PRBs used) to a total number of REs/sub-channels/PRBs configured in slot [n-a, n+b]; or, further, the CBR is a ratio of the ratio determined to comb M.

In this embodiment, evaluation is performed in each mini-slot. If the slot where the mini-slot is located is occupied, the frequency domain resource (REs/sub-channels/PRBs) is considered occupied or reserved, and is counted as the first resource. The first time domain resource is in unit of mini-slots, the first resource unit is in unit of slots in time domain, and the first resource or the first resource unit is in the unit of REs/sub-channels/PRBs in frequency domain.

In a specific embodiment of this application, if SL PRS and SL PSSCH/SL measurement report are configured to be transmitted in a shared resource pool, the network/terminal is configured to calculate the CR/CBR of the UE according to a ratio of the number of resource units (for example, REs/PRBs/RBs/sub-channels) for SL PRS and SL PSSCH/SL measurement report to a total number of resource units. Alternatively, the CR/CBR of the UE is calculated according to a ratio of a sum of the number of REs occupied by SL PRS and the number of sub-channels occupied by the SL measurement report * the number of REs per sub-channel to a total number of REs.

In the embodiments of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

The information processing method provided in the embodiments of this application can be executed by an information processing apparatus. In the embodiments of this application, the information processing method being executed by an information processing apparatus is used as an example to describe an information processing apparatus provided in an embodiment of this application.

As shown in FIG. 5, an embodiment of this application further provides an information processing apparatus 500 including:
a first determining module 501 configured to determine a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

Optionally, a time domain resource granularity of the first resource or a resource granularity of the first time domain resource includes one of the following:
slot;
symbol;
mini-slot; and
pre-configured time domain pattern;
a frequency domain resource granularity of the first resource includes one of the following:
   resource element RE;
   comb type;
   physical resource block PRB;
   sub-channel;
   pre-configured frequency domain pattern; and
   a frequency domain resource granularity determined based on a ratio of sub-channels to M, where M is determined based on comb type configuration; and
   the first resource unit meets at least one of the following:
      the first resource unit includes one or more REs, or includes one or more resource blocks, or includes one or more comb resources;
      a frequency domain resource granularity of the first resource unit includes RE, comb type, PRB, sub-channel, pre-configured frequency domain pattern, or a frequency domain resource granularity determined based on a ratio of sub-channels to M; and
      a time domain resource granularity of the first resource unit includes slot, symbol, mini-slot, or pre-configured time domain pattern.

Optionally, the time domain resource granularity of the first resource, the resource granularity of the first time domain resource, the frequency domain resource granularity of the first resource, or the first resource unit is predefined or configured, pre-configured, or indicated.

Optionally, the time domain resource granularity of the first resource, the resource granularity of the first time domain resource, the frequency domain resource granularity of the first resource, or the first resource unit is related to configuration of the first information.

Optionally, the apparatus of this application further includes:
a second determining module configured to, in a case that the configuration of the first information meets a first condition, determine that the time domain resource granularity of the first resource or the resource granularity of the first time domain resource is slot; where
the first condition includes at least one of the following:
   the configuration of the first information indicates that the first information is transmitted based on slot;
   the configuration of the first information indicates that the first information is transmitted in 12 symbols or 14 symbols; and
   the configuration of the first information indicates that one first information occasion is configured for one slot.

Optionally, the apparatus of this application further includes:
a third determining module configured to, in a case that the configuration of the first information meets a second condition, determine that the frequency domain resource granularity of the first resource or the frequency domain resource granularity of the first resource unit is PRB, sub-channel, or a frequency domain resource granularity determined based on a ratio of sub-channels to M, where M is determined based on comb type configuration; or
in a case that the configuration of the first information does not meet a second condition, determine that the frequency domain resource granularity of the first resource or the frequency domain resource granularity of the first resource unit is resource element RE or comb type; where
the second condition includes at least one of the following:
   the configuration of the first information indicates that the first information is full REs or full RBs or continuous frequency domain resources;
   the configuration of the first information indicates that the first information does not support frequency domain multiplexing; and
   the configuration of the first information indicates that the first information does not support comb.

Optionally, the first determining module is configured to determine the first parameter based on a first ratio of the first number to the total number of resources within the first time domain resource.

Optionally, the first determining module is configured to determine a ratio of the first ratio to M as the first parameter; where

M is determined based on comb type configuration of the first resource unit or the first resource.

Optionally, the total number of resources includes one of the following:
the number of resource units within the first time domain resource;
the number of resource units available for sidelink PRS within the first time domain resource;
the number of resource units available for sidelink PRS within a time domain resource of the first time domain resource;
the number of resource units available for PSSCH within the first time domain resource; and
the number of resource units available for PSSCH within a time domain resource of the first time domain resource; where
the resource unit includes one of the following:
   slot;
   symbol;
   mini-slot; and
   pre-configured time domain pattern.

Optionally, in a case that the first information is a PRS, the total number of resources includes one of the following:
the number of resource units available for sidelink PRS within the first time domain resource; and
the number of resource units available for sidelink PRS within a time domain resource of the first time domain resource; or
in a case that the first information is a PSSCH, the total number of resources includes one of the following:
   the number of resource units available for PSSCH within the first time domain resource; and
   the number of resource units available for PSSCH within a time domain resource of the first time domain resource.

Optionally, the first determining module is configured to determine, on a second resource, the first parameter based on the first number of first resource units occupied by the first resource within the first time domain resource; where
a position of the second resource meets one of the following:
being a first position; and
being a position N time units before the first position; where
the first position includes at least one of the following:
   a position of the N1-th symbol within a first slot, or a position offset by N1 symbols with respect to a target position within the first slot, where N1 corresponds to at least one configuration value, and the target position includes a start position or an end position;
   a start position of a sidelink PRS occasion within the first slot;
   a start position of a selectable sidelink PRS occasion within the first slot;
   a start position of a mini-slot within the first slot;
   an end position of a sidelink PRS occasion within the first slot;
   an end position of a mini-slot within the first slot;
   a start position of the N2-th sidelink PRS occasion within the first slot, where N2 is a predefined value, a pre-configured value, a configured value, or an indicated value, or N2 is a value determined based on time-frequency resource configuration information;
   a start position of the N3-th mini-slot within the first slot, where N3 is a predefined value, a pre-configured value, a configured value, or an indicated value, or N3 is a value determined based on time-frequency resource configuration information;
   an end position of the N4-th sidelink PRS occasion within the first slot, where N4 is a predefined value, a pre-configured value, a configured value, or an indicated value, or N4 is a value determined based on time-frequency resource configuration information; and
   an end position of the N5-th mini-slot within the first slot, where N5 is a predefined value, a pre-configured value, a configured value, or an indicated value, or N5 is a value determined based on time-frequency resource configuration information.

Optionally, the first determining module is configured to determine, in a first resource pool or a first BWP according to first configuration information, the first parameter based on a first number of first frequency domain resource units occupied by the first resource within the first time domain resource; where
the first configuration information indicates one of the following:
the sidelink PRS is transmitted in a dedicated resource pool;
the sidelink PRS is transmitted in a mini-slot;
the sidelink PRS is configured to be transmitted in comb or full REs; and
the sidelink PRS and the SL PSSCH are configured in a dedicated resource pool.

Optionally, the first determining module is configured to determine, in a second resource pool or a second BWP according to second configuration information, the first parameter based on a first number of first frequency domain resource units occupied by the first resource within the first time domain resource; where
the second configuration information indicates one of the following:
the sidelink PRS and the PSSCH are in a shared resource pool, or the sidelink PRS and a sidelink measurement report are in a shared resource pool, or the sidelink PRS and a physical sidelink feedback channel PSFCH are in a shared resource pool;
the sidelink PRS and the PSSCH are transmitted in a same resource pool; and
the sidelink PRS and the PSSCH are transmitted in a same time domain resource unit.

Optionally, the first determining module is configured to, in a case that a sidelink PRS is configured or indicated, determine the first parameter based on the first number of first resource units occupied by the first resource within the first time domain resource.

Optionally, the apparatus of this application further includes:
a fourth determining module configured to determine the first resource based on a resource corresponding to the sidelink PRS and/or a resource corresponding to the PSSCH.

In the embodiments of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

The information processing apparatus in this embodiment of this application may be an electronic device, such as an electronic device having an operating system, or a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The information processing apparatus provided in this embodiment of this application is capable of implementing the processes implemented in the method embodiment of FIG. 2, with the same technical effects achieved. To avoid repetition, details are not described herein again.

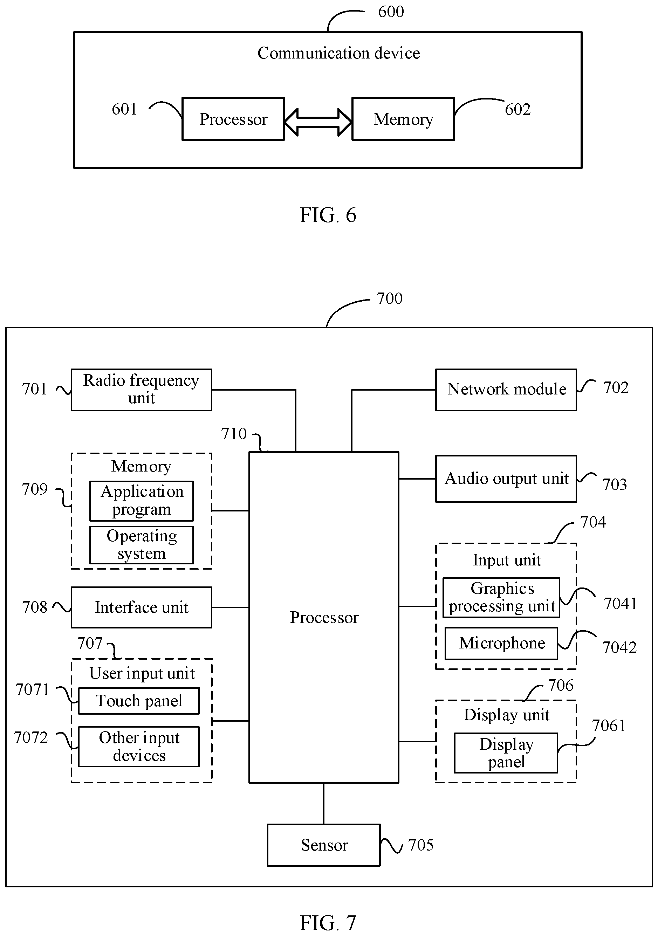

Optionally, as shown in FIG. 6, an embodiment of this application further provides a communication device 600 including a processor 601 and a memory 602. The memory 602 stores a program or instructions capable of running on the processor 601. For example, in a case that the communication device 600 is a terminal, when the program or instructions are executed by the processor 601, the processes of the foregoing embodiments of the information processing method are implemented, with the same technical effects achieved. To avoid repetition, details are not described herein again.

An embodiment of this application further provides a terminal including a processor and a communication interface, where the processor is configured to determine a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH. This terminal embodiment corresponds to the above method embodiments on the terminal side. The processes and implementations of the above method embodiments can be applied to this terminal embodiment, with the same technical effects achieved. Specifically, FIG. 7 is a schematic diagram of a hardware structure of a terminal implementing an embodiment of this application.

The terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system, so as to implement functions such as charging management, discharging management, and power consumption management through the power management system. The structure of the terminal shown in FIG. 7 does not constitute any limitation on the terminal. The terminal may include more or fewer components than shown in the figure, or a combination of some components, or the components disposed differently. Details are not described herein.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In the embodiment of this application, the radio frequency unit 701 receives downlink data from a network-side device and can transmit the downlink data to the processor 710 for processing; in addition, the radio frequency unit 701 can send uplink data to the network-side device. Typically, the radio frequency unit 701 includes but is not limited to an antenna, an amplifier, a transceiver, a coupler, a low noise amplifier, and a duplexer.

The memory 709 may be configured to store software programs or instructions and various data. The memory 709 may mainly include a first storage area for storing programs or instructions and a second storage area for storing data. The first storage area may store an operating system, an application program or instructions required by at least one function (for example, a sound play function or an image play function), and the like. Additionally, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 709 in the embodiment of this application includes but is not limited to these and any other suitable types of memory.

The processor 710 may include one or more processing units. Optionally, an application processor and a modem processor are integrated in the processor 710, where the application processor mainly processes operations related to an operating system, a user interface, an application program, and the like, and the modem processor, such as a baseband processor, mainly processes wireless communication signals. It can be understood that the modem processor may alternatively be not integrated in the processor 710.

The processor 710 is configured to determine a first parameter based on a first number of first resource units occupied by a first resource within a first time domain resource, where the first parameter includes at least one of a sidelink channel occupancy ratio SL CR and a sidelink channel busy ratio SL CBR, the first resource includes a resource for transmitting first information or a resource with a first measurement value greater than a pre-configured threshold, and the first information includes at least one of a sidelink positioning reference signal PRS and a physical sidelink shared channel PSSCH.

In the embodiment of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

Optionally, a time domain resource granularity of the first resource or a resource granularity of the first time domain resource includes one of the following:
slot;
symbol;
mini-slot; and
pre-configured time domain pattern;
a frequency domain resource granularity of the first resource includes one of the following:
   resource element RE;
   comb type;
   physical resource block PRB;
   sub-channel;
   pre-configured frequency domain pattern; and
   a frequency domain resource granularity determined based on a ratio of sub-channels to M, where M is determined based on comb type configuration; and
   the first resource unit meets at least one of the following:
      the first resource unit includes one or more REs, or includes one or more resource blocks, or includes one or more comb resources;
      a frequency domain resource granularity of the first resource unit includes RE, comb type, PRB, sub-channel, pre-configured frequency domain pattern, or a frequency domain resource granularity determined based on a ratio of sub-channels to M; and
      a time domain resource granularity of the first resource unit includes slot, symbol, mini-slot, or pre-configured time domain pattern.

Optionally, the time domain resource granularity of the first resource, the resource granularity of the first time domain resource, the frequency domain resource granularity of the first resource, or the first resource unit is predefined or configured, pre-configured, or indicated.

Optionally, the time domain resource granularity of the first resource, the resource granularity of the first time domain resource, the frequency domain resource granularity of the first resource, or the first resource unit is related to configuration of the first information.

Optionally, the processor 710 is further configured to:
in a case that the configuration of the first information meets a first condition, determine that the time domain resource granularity of the first resource or the resource granularity of the first time domain resource is slot; where
the first condition includes at least one of the following:
   the configuration of the first information indicates that the first information is transmitted based on slot;
   the configuration of the first information indicates that the first information is transmitted in 12 symbols or 14 symbols; and
   the configuration of the first information indicates that one first information occasion is configured for one slot.

Optionally, the processor 710 is further configured to:
in a case that the configuration of the first information meets a second condition, determine that the frequency domain resource granularity of the first resource or the frequency domain resource granularity of the first resource unit is PRB, sub-channel, or a frequency domain resource granularity determined based on a ratio of sub-channels to M, where M is determined based on comb type configuration; or
in a case that the configuration of the first information does not meet a second condition, determine that the frequency domain resource granularity of the first resource or the frequency domain resource granularity of the first resource unit is resource element RE or comb type; where
the second condition includes at least one of the following:
   the configuration of the first information indicates that the first information is full REs or full RBs or continuous frequency domain resources;
   the configuration of the first information indicates that the first information does not support frequency domain multiplexing; and
   the configuration of the first information indicates that the first information does not support comb.

Optionally, the processor 710 is further configured to:
determine the first parameter based on a first ratio of the first number to a total number of resources within the first time domain resource.

Optionally, the processor 710 is further configured to:
determine a ratio of the first ratio to M as the first parameter; where
M is determined based on comb type configuration of the first resource unit or the first resource.

Optionally, the total number of resources includes one of the following:
the number of resource units within the first time domain resource;
the number of resource units available for sidelink PRS within the first time domain resource;
the number of resource units available for sidelink PRS within a time domain resource of the first time domain resource;
the number of resource units available for PSSCH within the first time domain resource; and
the number of resource units available for PSSCH within a time domain resource of the first time domain resource; where
the resource unit includes one of the following:
   slot;
   symbol;
   mini-slot; and
   pre-configured time domain pattern.

Optionally, in a case that the first information is a PRS, the total number of resources includes one of the following:
the number of resource units available for sidelink PRS within the first time domain resource; and
the number of resource units available for sidelink PRS within a time domain resource of the first time domain resource; or
in a case that the first information is a PSSCH, the total number of resources includes one of the following:
   the number of resource units available for PSSCH within the first time domain resource; and
   the number of resource units available for PSSCH within a time domain resource of the first time domain resource.

Optionally, the processor 710 is further configured to:
determine, on a second resource, the first parameter based on the first number of first resource units occupied by the first resource within the first time domain resource; where
a position of the second resource meets one of the following:
   being a first position; and
   being a position N time units before the first position; where
   the first position includes at least one of the following:
a position of the N1-th symbol within a first slot, or a position offset by N1 symbols with respect to a target position within the first slot, where N1 corresponds to at least one configuration value, and the target position includes a start position or an end position;
a start position of a sidelink PRS occasion within the first slot;
a start position of a selectable sidelink PRS occasion within the first slot;
a start position of a mini-slot within the first slot;
an end position of a sidelink PRS occasion within the first slot;
an end position of a mini-slot within the first slot;
a start position of the N2-th sidelink PRS occasion within the first slot, where N2 is a predefined value, a pre-configured value, a configured value, or an indicated value, or N2 is a value determined based on time-frequency resource configuration information;
a start position of the N3-th mini-slot within the first slot, where N3 is a predefined value, a pre-configured value, a configured value, or an indicated value, or N3 is a value determined based on time-frequency resource configuration information;
an end position of the N4-th sidelink PRS occasion within the first slot, where N4 is a predefined value, a pre-configured value, a configured value, or an indicated value, or N4 is a value determined based on time-frequency resource configuration information; and
an end position of the N5-th mini-slot within the first slot, where N5 is a predefined value, a pre-configured value, a configured value, or an indicated value, or N5 is a value determined based on time-frequency resource configuration information.

Optionally, the processor 710 is further configured to:
determine, in a first resource pool or a first BWP according to first configuration information, the first parameter based on a first number of first frequency domain resource units occupied by the first resource within the first time domain resource; where
the first configuration information indicates one of the following:
   the sidelink PRS is transmitted in a dedicated resource pool;
   the sidelink PRS is transmitted in a mini-slot;
   the sidelink PRS is configured to be transmitted in comb or full REs; and
   the sidelink PRS and the SL PSSCH are configured in a dedicated resource pool.

Optionally, the processor 710 is further configured to:
determine, for the terminal in a second resource pool or a second BWP according to second configuration information, the first parameter based on a first number of first frequency domain resource units occupied by the first resource within the first time domain resource; where
the second configuration information indicates one of the following:
   the sidelink PRS and the PSSCH are in a shared resource pool, or the sidelink PRS and a sidelink measurement report are in a shared resource pool, or the sidelink PRS and a physical sidelink feedback channel PSFCH are in a shared resource pool;
   the sidelink PRS and the PSSCH are transmitted in a same resource pool; and
   the sidelink PRS and the PSSCH are transmitted in a same time domain resource unit.

Optionally, the processor 710 is further configured to:
in a case that a sidelink PRS is configured or indicated, determine, for the terminal, the first parameter based on the first number of first resource units occupied by the first resource within the first time domain resource.

Optionally, the processor 710 is further configured to:
determine the first resource based on a resource corresponding to the sidelink PRS and/or a resource corresponding to the PSSCH.

In the embodiment of this application, at least one of the SL CR and the sidelink channel busy ratio SL CBR is determined based on the first number of first resource units occupied by the first resource within the first time domain resource, where the first resource includes a resource for transmitting first information or a resource with a first measurement value greater than a pre-configured threshold, and the first information includes at least one of a sidelink PRS and a PSSCH. Since the first resource units can be calculated at a smaller resource granularity (for example, mini-slot or RE), the terminal can calculate the first parameter corresponding to the sidelink PRS and/or PSSCH at a smaller resource granularity. In other words, the foregoing method for determining the first parameter can be well applied to congestion control calculation during SL PRS transmission.

An embodiment of this application further provides a readable storage medium. The readable storage medium stores a program or instructions. When the program or instructions are executed by a processor, the processes of the foregoing embodiment of the information processing method are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the foregoing information processing method embodiments, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the steps of the foregoing information processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information processing method, comprising:
determining, by a terminal, a first parameter based on a first number of first resource units occupied by a first resource within a first time domain resource, wherein the first parameter comprises at least one of a sidelink channel occupancy ratio SL CR and a sidelink channel busy ratio SL CBR, the first resource comprises a resource for transmitting first information or a resource with a first measurement value greater than a pre-configured threshold, and the first information comprises at least one of a sidelink positioning reference signal PRS and a physical sidelink shared channel PSSCH.

2. The method according to claim 1, wherein a time domain resource granularity of the first resource or a resource granularity of the first time domain resource comprises one of the following:
slot;
symbol;
mini-slot; and
pre-configured time domain pattern;
a frequency domain resource granularity of the first resource comprises one of the following:
resource element RE;
comb type;
physical resource block PRB;
sub-channel;
pre-configured frequency domain pattern; and
a frequency domain resource granularity determined based on a ratio of sub-channels to M, wherein M is determined based on comb type configuration; and
the first resource unit meets at least one of the following:
the first resource unit comprises one or more REs, or comprises one or more resource blocks, or comprises one or more comb resources;
a frequency domain resource granularity of the first resource unit comprises RE, comb type, PRB, sub-channel, pre-configured frequency domain pattern, or a frequency domain resource granularity determined based on a ratio of sub-channels to M; and
a time domain resource granularity of the first resource unit comprises slot, symbol, mini-slot, or pre-configured time domain pattern.

3. The method according to claim 2, wherein the time domain resource granularity of the first resource, the resource granularity of the first time domain resource, the frequency domain resource granularity of the first resource, or the first resource unit is predefined or configured, pre-configured, or indicated.

4. The method according to claim 2, wherein the time domain resource granularity of the first resource, the resource granularity of the first time domain resource, the frequency domain resource granularity of the first resource, or the first resource unit is related to configuration of the first information.

5. The method according to claim 1 or 4, further comprising:
in a case that the configuration of the first information meets a first condition, determining that the time domain resource granularity of the first resource or the resource granularity of the first time domain resource is slot; wherein
the first condition comprises at least one of the following:
the configuration of the first information indicates that the first information is transmitted based on slot;
the configuration of the first information indicates that the first information is transmitted in 12 symbols or 14 symbols; and
the configuration of the first information indicates that one first information occasion is configured for one slot.

6. The method according to claim 1 or 4, further comprising:
in a case that the configuration of the first information meets a second condition, determining that the frequency domain resource granularity of the first resource or the frequency domain resource granularity of the first resource unit is PRB, sub-channel, or a frequency domain resource granularity determined based on a ratio of sub-channels to M, wherein M is determined based on comb type configuration; or
in a case that the configuration of the first information does not meet a second condition, determining that the frequency domain resource granularity of the first resource or the frequency domain resource granularity of the first resource unit is resource element RE or comb type; wherein
the second condition comprises at least one of the following:
the configuration of the first information indicates that the first information is full REs or full RBs or continuous frequency domain resources;
the configuration of the first information indicates that the first information does not support frequency domain multiplexing; and
the configuration of the first information indicates that the first information does not support comb.

7. The method according to claim 1, wherein the determining, by a terminal, a first parameter based on a first number of first resource units occupied by a first resource within a first time domain resource comprises:
determining, by the terminal, the first parameter based on a first ratio of the first number to a total number of resources within the first time domain resource.

8. The method according to claim 7, wherein the determining, by the terminal, the first parameter based on a first ratio of the first number to a total number of resources within the first time domain resource comprises:
determining a ratio of the first ratio to M as the first parameter; wherein
M is determined based on comb type configuration of the first resource unit or the first resource.

9. The method according to claim 7 or 8, wherein the total number of resources comprises one of the following:
the number of resource units within the first time domain resource;
the number of resource units available for sidelink PRS within the first time domain resource;
the number of resource units available for sidelink PRS within a time domain resource of the first time domain resource;
the number of resource units available for PSSCH within the first time domain resource; and
the number of resource units available for PSSCH within a time domain resource of the first time domain resource; where
the resource unit comprises one of the following:
slot;
symbol;
mini-slot; and
pre-configured time domain pattern.

10. The method according to claim 9, wherein in a case that the first information is a PRS, the total number of resources comprises one of the following:
the number of resource units available for sidelink PRS within the first time domain resource; and
the number of resource units available for sidelink PRS within a time domain resource of the first time domain resource; or
in a case that the first information is a PSSCH, the total number of resources comprises one of the following:
the number of resource units available for PSSCH within the first time domain resource; and
the number of resource units available for PSSCH within a time domain resource of the first time domain resource.

11. The method according to claim 1, wherein the determining, by a terminal, a first parameter based on a first number of first resource units occupied by a first resource within a first time domain resource comprises:
determining, by the terminal on a second resource, the first parameter based on the first number of first resource units occupied by the first resource within the first time domain resource; wherein
a position of the second resource meets one of the following:
being a first position; and
being a position N time units before the first position; wherein
the first position comprises at least one of the following:
a position of the N1-th symbol within a first slot, or a position offset by N1 symbols with respect to a target position within the first slot, wherein N1 corresponds to at least one configuration value, and the target position comprises a start position or an end position;
a start position of a sidelink PRS occasion within the first slot;
a start position of a selectable sidelink PRS occasion within the first slot;
a start position of a mini-slot within the first slot;
an end position of a sidelink PRS occasion within the first slot;
an end position of a mini-slot within the first slot;
a start position of the N2-th sidelink PRS occasion within the first slot, wherein N2 is a predefined value, a pre-configured value, a configured value, or an indicated value, or N2 is a value determined based on time-frequency resource configuration information;
a start position of the N3-th mini-slot within the first slot, wherein N3 is a predefined value, a pre-configured value, a configured value, or an indicated value, or N3 is a value determined based on time-frequency resource configuration information;
an end position of the N4-th sidelink PRS occasion within the first slot, wherein N4 is a predefined value, a pre-configured value, a configured value, or an indicated value, or N4 is a value determined based on time-frequency resource configuration information; and
an end position of the N5-th mini-slot within the first slot, wherein N5 is a predefined value, a pre-configured value, a configured value, or an indicated value, or N5 is a value determined based on time-frequency resource configuration information.

12. The method according to claim 1, wherein the determining, by a terminal, a first parameter based on a first number of first resource units occupied by a first resource within a first time domain resource comprises:
determining, in a first resource pool or a first BWP according to first configuration information, the first parameter based on a first number of first frequency domain resource units occupied by the first resource within the first time domain resource; wherein
the first configuration information indicates one of the following:
the sidelink PRS is transmitted in a dedicated resource pool;
the sidelink PRS is transmitted in a mini-slot;
the sidelink PRS is configured to be transmitted in comb or full REs; and
the sidelink PRS and the SL PSSCH are configured in a dedicated resource pool.

13. The method according to claim 1, wherein the determining, by a terminal, a first parameter based on a first number of first resource units occupied by a first resource within a first time domain resource comprises:
determining, by the terminal in a second resource pool or a second BWP according to second configuration information, the first parameter based on a first number of first frequency domain resource units occupied by the first resource within the first time domain resource; wherein
the second configuration information indicates one of the following:
the sidelink PRS and the PSSCH are in a shared resource pool, or the sidelink PRS and a sidelink measurement report are in a shared resource pool, or the sidelink PRS and a physical sidelink feedback channel PSFCH are in a shared resource pool;
the sidelink PRS and the PSSCH are transmitted in a same resource pool; and
the sidelink PRS and the PSSCH are transmitted in a same time domain resource unit.

14. The method according to claim 13, wherein the determining, by a terminal, a first parameter based on a first number of first resource units occupied by a first resource within a first time domain resource comprises:
in a case that a sidelink PRS is configured or indicated, determining, by the terminal, the first parameter based on the first number of first resource units occupied by the first resource within the first time domain resource.

15. The method according to claim 1, further comprising:
determining the first resource based on a resource corresponding to the sidelink PRS and/or a resource corresponding to the PSSCH.

16. An information processing apparatus, comprising:
a first determining module configured to determine a first parameter based on a first number of first resource units occupied by a first resource within a first time domain resource, wherein the first parameter comprises at least one of a sidelink channel occupancy ratio SL CR and a sidelink channel busy ratio SL CBR, the first resource comprises a resource for transmitting first information or a resource with a first measurement value greater than a pre-configured threshold, and the first information comprises at least one of a sidelink positioning reference signal PRS and a physical sidelink shared channel PSSCH.

17. The apparatus according to claim 16, wherein a time domain resource granularity of the first resource or a resource granularity of the first time domain resource comprises one of the following:
slot;
symbol;
mini-slot; and
pre-configured time domain pattern;
a frequency domain resource granularity of the first resource comprises one of the following:
resource element RE;
comb type;
physical resource block PRB;
sub-channel;
pre-configured frequency domain pattern; and
a frequency domain resource granularity determined based on a ratio of sub-channels to M, wherein M is determined based on comb type configuration; and
the first resource unit meets at least one of the following:
the first resource unit comprises one or more REs, or comprises one or more resource blocks, or comprises one or more comb resources;
a frequency domain resource granularity of the first resource unit comprises RE, comb type, PRB, sub-channel, pre-configured frequency domain pattern, or a frequency domain resource granularity determined based on a ratio of sub-channels to M; and
a time domain resource granularity of the first resource unit comprises slot, symbol, mini-slot, or pre-configured time domain pattern.

18. The apparatus according to claim 17, wherein the time domain resource granularity of the first resource, the resource granularity of the first time domain resource, the frequency domain resource granularity of the first resource, or the first resource unit is predefined or configured, pre-configured, or indicated.

19. The apparatus according to claim 17, wherein the time domain resource granularity of the first resource, the resource granularity of the first time domain resource, the frequency domain resource granularity of the first resource, or the first resource unit is related to configuration of the first information.

20. The apparatus according to claim 16 or 19, further comprising:
a second determining module configured to, in a case that the configuration of the first information meets a first condition, determine that the time domain resource granularity of the first resource or the resource granularity of the first time domain resource is slot; wherein
the first condition comprises at least one of the following:
the configuration of the first information indicates that the first information is transmitted based on slot;
the configuration of the first information indicates that the first information is transmitted in 12 symbols or 14 symbols; and
the configuration of the first information indicates that one first information occasion is configured for one slot.

21. The apparatus according to claim 16 or 19, further comprising:
a third determining module configured to, in a case that the configuration of the first information meets a second condition, determine that the frequency domain resource granularity of the first resource or the frequency domain resource granularity of the first resource unit is PRB, sub-channel, or a frequency domain resource granularity determined based on a ratio of sub-channels to M, wherein M is determined based on comb type configuration; or
in a case that the configuration of the first information does not meet a second condition, determine that the frequency domain resource granularity of the first resource or the frequency domain resource granularity of the first resource unit is resource element RE or comb type; wherein
the second condition comprises at least one of the following:
the configuration of the first information indicates that the first information is full REs or full RBs or continuous frequency domain resources;
the configuration of the first information indicates that the first information does not support frequency domain multiplexing; and
the configuration of the first information indicates that the first information does not support comb.

22. The apparatus according to claim 16, wherein the first determining module is configured to determine the first parameter based on a first ratio of the first number to a total number of resources within the first time domain resource.

23. The apparatus according to claim 22, wherein the first determining module is configured to determine a ratio of the first ratio to M as the first parameter, wherein
M is determined based on comb type configuration of the first resource unit or the first resource.

24. The apparatus according to claim 22 or 23, wherein the total number of resources comprises one of the following:
the number of resource units within the first time domain resource;
the number of resource units available for sidelink PRS within the first time domain resource;
the number of resource units available for sidelink PRS within a time domain resource of the first time domain resource;
the number of resource units available for PSSCH within the first time domain resource; and
the number of resource units available for PSSCH within a time domain resource of the first time domain resource; wherein
the resource unit comprises one of the following:
slot;
symbol;
mini-slot; and
pre-configured time domain pattern.

25. The apparatus according to claim 24, wherein in a case that the first information is a PRS, the total number of resources comprises one of the following:
the number of resource units available for sidelink PRS within the first time domain resource; and
the number of resource units available for sidelink PRS within a time domain resource of the first time domain resource; or
in a case that the first information is a PSSCH, the total number of resources comprises one of the following:
the number of resource units available for PSSCH within the first time domain resource; and
the number of resource units available for PSSCH within a time domain resource of the first time domain resource.

26. The apparatus according to claim 16, wherein the first determining module is configured to determine, on a second resource, the first parameter based on the first number of first resource units occupied by the first resource within the first time domain resource; wherein
a position of the second resource meets one of the following:
being a first position; and
being a position N time units before the first position; wherein
the first position comprises at least one of the following:
a position of the N1-th symbol within a first slot, or a position offset by N1 symbols with respect to a target position within the first slot, wherein N1 corresponds to at least one configuration value, and the target position comprises a start position or an end position;
a start position of a sidelink PRS occasion within the first slot;
a start position of a selectable sidelink PRS occasion within the first slot;
a start position of a mini-slot within the first slot;
an end position of a sidelink PRS occasion within the first slot;
an end position of a mini-slot within the first slot;
a start position of the N2-th sidelink PRS occasion within the first slot, wherein N2 is a predefined value, a pre-configured value, a configured value, or an indicated value, or N2 is a value determined based on time-frequency resource configuration information;
a start position of the N3-th mini-slot within the first slot, wherein N3 is a predefined value, a pre-configured value, a configured value, or an indicated value, or N3 is a value determined based on time-frequency resource configuration information;
an end position of the N4-th sidelink PRS occasion within the first slot, wherein N4 is a predefined value, a pre-configured value, a configured value, or an indicated value, or N4 is a value determined based on time-frequency resource configuration information; and
an end position of the N5-th mini-slot within the first slot, wherein N5 is a predefined value, a pre-configured value, a configured value, or an indicated value, or N5 is a value determined based on time-frequency resource configuration information.

27. The apparatus according to claim 16, wherein the first determining module is configured to determine, in a first resource pool or a first BWP according to first configuration information, the first parameter based on a first number of first frequency domain resource units occupied by the first resource within the first time domain resource; wherein
the first configuration information indicates one of the following:
the sidelink PRS is transmitted in a dedicated resource pool;
the sidelink PRS is transmitted in a mini-slot;
the sidelink PRS is configured to be transmitted in comb or full REs; and
the sidelink PRS and the SL PSSCH are configured in a dedicated resource pool.

28. The apparatus according to claim 16, wherein the first determining module is configured to determine, in a second resource pool or a second BWP according to second configuration information, the first parameter based on a first number of first frequency domain resource units occupied by the first resource within the first time domain resource; wherein
the second configuration information indicates one of the following:
the sidelink PRS and the PSSCH are in a shared resource pool, or the sidelink PRS and a sidelink measurement report are in a shared resource pool, or the sidelink PRS and a physical sidelink feedback channel PSFCH are in a shared resource pool;
the sidelink PRS and the PSSCH are transmitted in a same resource pool; and
the sidelink PRS and the PSSCH are transmitted in a same time domain resource unit.

29. The apparatus according to claim 28, wherein the first determining module is configured to, in a case that a sidelink PRS is configured or indicated, determine the first parameter based on the first number of first resource units occupied by the first resource within the first time domain resource.

30. The apparatus according to claim 16, further comprising:
a fourth determining module configured to determine the first resource based on a resource corresponding to the sidelink PRS and/or a resource corresponding to the PSSCH.

31. A terminal, comprising a processor and a memory, wherein the memory stores a program or instructions capable of running on the processor, and when the program or instructions are executed by the processor, the steps of the information processing method according to any one of claims 1 to 15 are implemented.

32. A readable storage medium, wherein the readable storage medium stores a program or instructions, and when the program or instructions are executed by a processor, the steps of the information processing method according to any one of claims 1 to 15 are implemented.
